# EUROPÄISCHE PATENTSCHRIFT

(11) **EP 0 302 561 B1**
(45) Veröffentlichungstag und Bekanntmachung des Hinweises auf die Patenterteilung: **14.04.1993**
(21) Anmeldenummer: 88201627.2
(22) Anmeldetag: 28.07.1988
(51) Int. Cl.: G11B 17/028, G11B 19/20

(54) **Saughaltevorrichtung zum Halten eines plattenförmigen Informationsträgers beim Abspielvorgang**
Suction holding device to hold a disc-like information carrier during reproduction
Dispositif de maintien à succion pour maintenir un support d'information en forme de disque durant la lecture

(30) Priorität: 07.08.1987 DE 3726226
(43) Veröffentlichungstag der Anmeldung: 08.02.1989
(73) Patentinhaber: Philips and Du Pont Optical Deutschland GmbH, 30177 Hannover (DE); Philips and Du Pont Optical Company, 3435 SB Nieuwegein (NL)
(72) Erfinder: Schnorr, Thomas, D-3340 Wolfenbüttel (DE); Hannemann, Jürgen, D-3016 Seelze 5 (DE)
(74) Vertreter: Erdmann, Anton, Dipl.-Ing.

(56) Entgegenhaltungen:
- PATENT ABSTRACTS OF JAPAN, unexamined applications, P Field, Band 11, Nr. 49, 14. Februar 1987 THE PATENT OFFICE JAPANESE GOVERNMENT Seite 2 P 547
- PATENT ABSTRACTS OF JAPAN, unexamined applications, P Field, Band 11, Nr. 186, 16. Juni 1987 THE PATENT OFFICE JAPANESE GOVERNMENT Seite 82 P 586

## Beschreibung

Die Erfindung bezieht sich auf eine Saughaltevorrichtung zum Halten eines optisch auslesbaren, plattenförmigen Informationsträgers, die etwa den gleichen Durchmesser aufweist wie der Informationsträger und die diesen während des Auslesens mittels eines Abspielgerätes an ihrer Halteseite mittels Vakuum hält.

Für konventionelle Schallplatten, d. h. also solche Platten, in denen die Information in rillenförmigen Vertiefungen eingebracht ist, welche an ihren Flanken moduliert sind, und die mechanisch mittels einer Nadel abgetastet werden, sind Abspielgeräte bekannt, bei denen die Platte auf dem Plattenteller mittels Vakuum angesaugt wird siehe JP 61-214 272. Bei derartigen Abspielgeräten wird damit der Vorteil erreicht, daß auch in sich verwundene bzw. verworfene Platten durch das Ansaugen auf den Plattenteller auf diesem plan aufliegen und somit keine Rumpelstörungen und Gleichlaufschwankungen oder ähnliches beim Abspielen auftreten.

Es ist Aufgabe der Erfindung, für optisch auslesbare, plattenförmige Informationsträger eine Saughaltevorrichtung zu schaffen, welche es gestattet, einen mittels der Vorrichtung gehaltenen, auch sehr dünnen Informationsträger auf einem konventionellen Abspielgerät ohne wesentliche Modifikationen abspielen zu können.

Die erfindung ist durch Anspruch 1 definiert.

Die Saughaltevorrichtung, die etwa den gleichen Durchmesser hat wie ein optisch auslesbarer, plattenförmiger Informationsträger, weist auf ihrer Halteseite konzentrisch angeordnete, ringförmige Vertiefungen sowie wenigstens eine radial verlaufende Vertiefung auf. Diese Vertiefungen werden mit Vakuum beaufschlagt. Auf diese Weise wird ein plattenförmiger Informationsträger auf der Halteseite der Vorrichtung festgesaugt. Damit sind auch solche Informationsträger abspielbar, welche beispielsweise einen zu großen Höhenschlag aufweisen, der normalerweise ein Auslesen nicht mehr gestatten würde. Es bietet sich darüber hinaus der Vorteil, daß auch sehr dünne Informationsträger abspielbar sind, wie sie beispielsweise bei den galvanischen Vervielfältigungsschritten von dem Ursprungsmaster bis hin zur Preßmatrize entstehen. Die Saughaltevorrichtung gestattet es, auch diese, häufig sehr dünnen, Galvanos auf einem entsprechenden Abspielgerät auszulesen.

Zum Auslesen wird die Saughaltevorrichtung mit einem mittels des Vakuums angesaugten Informationsträger auf den Drehteller eines Abspielgerätes aufgesetzt. Bei sehr vielen Abspielgeräten ist eine Art Schublade vorgesehen, in der das komplette Laufwerk vorgesehen ist, so daß das Gerät auch mit ausgefahrener Schublade betriebsbereit ist. In diesen Fällen kann ein mittels der Vorrichtung angesaugter Informationsträger, der mitsamt der Vorrichtung auf den Drehteller des Abspielgerätes aufgesetzt ist, ohne jede Modifikation des Gerätes auf diesem ausgelesen werden.

Die Saughaltevorrichtung ist drehbar ausgelegt. Die Zuführung des Vakuums geschieht von der der Halteseite gegenüberligenden Seite her mittels eines Schlauches. Dieser Schlauch ist einem an der Saughaltevorrichtung vorgesehenen, drehbar gelagerten Anschlußstück zugeführt. Dieses Anschlußstück weist zur Vakuum-Weiterleitung eine nahezu luftdichte Durchführung auf. Das Vakuum wird innerhalb der Vorrichtung von dieser luftdichten Durchführung zu den Vertiefungen auf der Halteseite der Vorrichtungen geleitet.

Infolge der drehbar ausgelegten Anordnung der Vorrichtung ergibt sich die Möglichkeit, die Vorrichtung zusammen mit einem angesaugten Informationsträger auf den Drehteller eines Abspielgerätes aufzusetzen und auf diesem abzuspielen bzw. auszulesen.

Die Saughaltevorrichtung ist auch in Verbindung mit solchen Abspielgeräten einsetzbar, bei denen das Laufwerk im Gerät verbleibt und lediglich der Informationsträger zum Laden über eine Schublade in das Gerät hineingeholt und dem Laufwerk zugeführt wird. In diesen Fällen genügt es meist, das in dem Gerät befindliche Laufwerk von oben zugänglich zu machen, so daß von oben mittels der Saughaltevorrichtung ein plattenförmiger Informationsträger auf das Laufwerk aufgesetzt und auf diesem ausgelesen werden kann.

Nach einer weiteren Ausgestaltung der Erfindung ist vorgesehen, daß die mit den Vertiefungen versehene Halteseite der Vorrichtung im Bereich ihres äußeren Randes und im Zentrumsbereich ringförmig angeordnete Dichtlippen aufweist.

Je nach Beschaffenheit der anzusaugenden, optisch auslesbaren, plattenförmigen Informationsträger kann es vorteilhaft sein, die Vorrichtung auf der mit den Vertiefungen versehenen Halteseite an ihrem äußeren Rand und im Zentrumsbereich mit ringförmig angeordneten Dichtlippen auszustatten. Diese Dichtlippen sollten ausreichend flexibel sein, so daß sie nicht zu einem Verwinden des angesaugten Informationsträgers führen.

Nach einer weiteren Ausgestaltung der Erfindung ist vorgesehen, daß die Halteseite der Vorrichtung im Zentrum mit einer Vertiefung zur Aufnahme eines Zentrierdorns des Drehtellers des Abspielgerätes versehen ist.

Im Regelfalle sind die Drehteller eines Abspielgerätes für optisch auslesbare, plattenförmige Informationsträger, beispielsweise für Compact-Discs, mit einem Mitteldorn versehen, der in das Zentrumsloch des Informationsträgers eingreift, so daß dieser zentriert wird. Dieser Zentrumsdorn kann etwas nach oben über einen aufgelegten Informationsträger hinaus ragen. Es ist daher vorgesehen, die Saughaltevorrichtung auf ihrer Halteseite im Zentrum mit einer Vertiefung zur Aufnahme eines gegebenenfalls nach oben hervorstehenden Zentrierdorns des Drehtellers des Abspielgerätes zu versehen.

Nach einer weiteren Ausgestaltung der Erfindung ist vorgesehen, daß das Anschlußstück an der Vorrichtung mittels eines Kugellagers gelagert ist. Das an der Vorrichtung vorgesehene Anschlußstück, das eine luftdichte Durchführung zur Weiterleitung des ihm mittels eines Schlauches zugeführten Vakuums an die in der Vorrichtung versehenen Vertiefungen aufweist, ist vorteilhafterweise mittels eines Kugellagers in der Vorrichtung gelagert. Es ergibt sich dann eine besonders geringe Reibung, so daß die Vorrichtung beim Abspielen bzw. Auslesen eines Informationsträgers auf einem Abspielgerät sich möglichst wenig durch ein Bremsdrehmoment störend bemerkbar macht.

Nach einer weiteren Ausgestaltung der Erfindung ist vorgesehen, daß die Vorrichtung auch dem Transport des plattenförmigen Informationsträgers zum und vom Abspielgerät dient.

Ein wesentlicher Vorteil der Saughaltevorrichtung besteht darin, daß sie nicht nur beim Abspielen zum planen Halten eines Informationsträgers geeignet ist, sondern daß sie außerdem auch zum Transport des plattenförmigen Informationsträgers zu dem Abspielgerät bzw. von diesem weg dient. Es bietet sich damit z. B. die Möglichkeit eines automatisierten Transportes. Außerdem entsteht beim Transport eines Informationsträgers mittels der Saughaltevorrichtung nicht mehr die Gefahr, daß der Informationsträger mit den Händen berührt wird, was den Auslesevorgang stören kann. Dies ist insbesondere beim Prüfen von Galvanos bzw. mittels einer Preßmatrize hergestellter Prüfplatten von Bedeutung.

Nach einer weiteren Ausgestaltung der Erfindung ist vorgesehen, daß es sich bei dem mittels der Vorrichtung gehaltenen Informationsträger um ein Galvano handelt.

Für die Herstellung plattenförmiger, optisch auslesbarer Informationsträger wird zunächst ein sogenannter Master erstellt, der auf einer Seite mit einer Fotoresistschicht versehen ist, die partiell belichtet wird und nach Entwicklung die Information in Form von Vertiefungen aufweist. Diese Informationsseite des Masters wird dann über mehrere galvanische Vervielfältigungsschritte immer wieder dupliziert bis hin zu der Preßmatrize. Bei jeder dieser Vervielfältigungsschritte entsteht ein Galvano, welches auf einwandfreien Zustand der Informationsstruktur hin zu überprüfen ist. Diese Galvanos sind sehr empfindlich und weisen häufig auch eine sehr geringe Dicke auf, so daß sie zu Verwerfungen neigen. Die Saughaltevorrichtung nach der Erfindung ist für derartige Galvanos besonders vorteilhaft, da sie für den Prüfvorgang, d. h. beim Abspielen in einem Auslesegerät, plan aufgespannt werden und somit ihre mechanische Labilität keine Rolle mehr spielt. Gerade bei derartigen Galvanos ist es wichtig, daß diese auf ihrer Informationsseite nicht berührt werden. Daher ist es vorteilhaft, auch den Transport des Galvanos zu dem Abspielgerät hin und von dem Abspielgerät weg mittels der Saughaltevorrichtung vorzunehmen, da dann ein Anfassen des Galvanos nicht mehr erforderlich ist.

Ein Ausführungsbeispiel der Erfindung wird anhand der Zeichnungen näher erläutert. Es zeigen:
Fig. 1 eine Saughaltevorrichtung im Schnitt,
Fig. 2 die Saughaltevorrichtung nach Fig. 1 mit einem angesaugten, optisch auslesbaren, plattenförmigen Informationsträger, in auf einen Drehteller eines Abspielgerätes aufgesetzten Zustand.

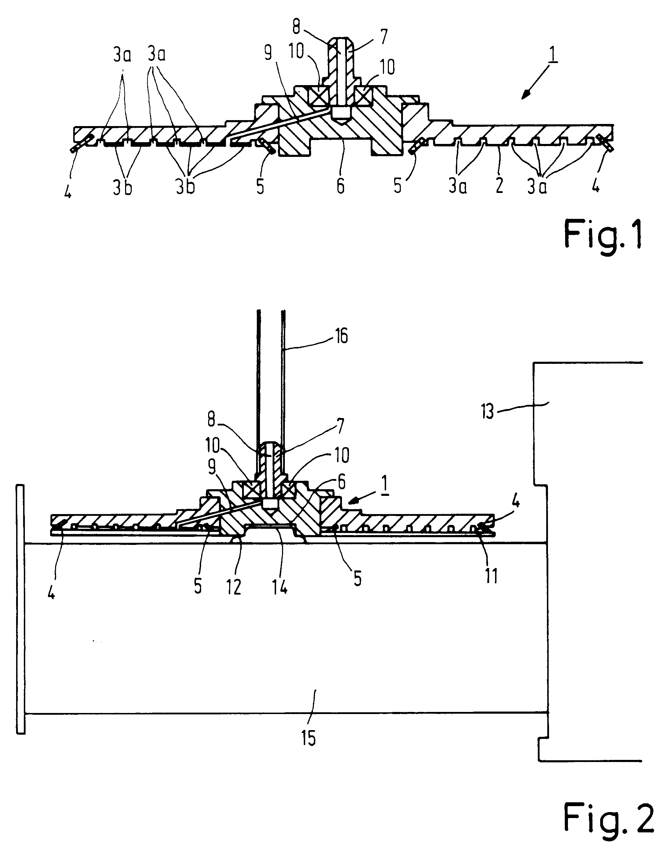

Eine in Fig. 1 dargestellte Saughaltevorrichtung 1 weist auf ihrer Halteseite 2 konzentrisch angeordnete und ringförmig um das Zentrum der Vorrichtung verlaufende Vertiefungen 3a auf. Zusätzlich ist eine radial verlaufende Vertiefung 3b vorgesehen, welche die ringförmig verlaufenden Vertiefungen 3a untereinander verbindet. Die Halteseite 2 ist ferner an ihrem äußeren Rand mit einer Dichtlippe 4 und in ihrem Zentrumsbereich mit einer Dichtlippe 5 versehen. Diese Dichtlippen verlaufen jeweils ringförmig auf der Halteseite. Mittels dieser Dichtlippen 4 und 5 ist derjenige Bereich der Halteseite 2 nach außen bzw. innen hin abgegrenzt, der die ringförmig angeordneten Vertiefungen 3a aufweist. Im Zentrumsbereich innerhalb der Dichtlippe 5 weist die Vorrichtung eine Vertiefung 6 auf, die der Aufnahme eines Mitteldorns des Drehtellers eines in der Figur nicht dargestellten Abspielgerätes dient.

Den ringförmig angeordneten Vertiefungen 3a und der radial verlaufenden Vertiefung 3b, welche die ringförmig angeordneten Vertiefungen untereinander verbindet, ist über ein auf der der Halteseite der Vorrichtung gegenüberliegenden Seite angeordnetes Anschlußstück 7 Vakuum zugeführt. Dazu weist das Anschlußstück 7 eine luftdichte Durchführung 8 auf, welche von außen mit Vakuum beaufschlagt wird. Die luftdichte Durchführung 8 des Anschlußstückes 7 ist innerhalb der Vorrichtung 1 mit einer Rohrverbindung 9 verbunden, welche das Vakuum von der Durchführung 8 zu einer der ringförmig angeordneten Vertiefungen 3a, die auf der Halteseite 2 der Vorrichtung vorgesehen sind, weiterleitet. Da die ringförmig angeordneten Vertiefungen 3a mittels der radialen Vertiefung 3b untereinander verbunden sind, werden so alle Vertiefungen mit Vakuum beaufschlagt.

Zur drehbaren Auslegung der Saughaltevorrichtung ist das Anschlußstück innerhalb der Vorrichtung mittels eines Kugellagers 10 drehbar gelagert. Damit kann dem Anschlußstück 7 von außen mittels einer nicht drehbaren Verbindung Vakuum zugeführt werden. Während des Abspielvorganges dreht sich dann das Anschlußstück 7 innerhalb der Vorrichtung.

Dies wird im folgenden anhand der Fig. 2 näher erläutert, in der die in Fig. 1 dargestellte Saughaltevorrichtung mitsamt eines angesaugten, optisch auslesbaren, plattenförmigen Informationsträgers 11 ist. Die Saughaltevorrichtung 1 ist mit ihrem Zentrumsbereich auf einen Drehteller 12 eines Abspielgerätes 13 aufgesetzt. Der Drehteller 12, der in seinem Zentrum einen nach oben stehenden Dorn 14 aufweist, welcher in die Vertiefung 6 in der Vorrichtung hineinragt, ist auf einer Schublade 15 des Abspielgerätes 13 vorgesehen.

In Fig. 2 ist die Schublade 15 im ausgefahrenen Zustand mit der aufgesetzten Vorrichtung und dem mittels dieser angesaugten plattenförmigen Informationsträger dargestellt. In dieser Konstellation ist der plattenförmige Informationsträger 11 mittels des Abspielgerätes auslesbar, da in der Schublade 15 ein in der Figur nicht näher dargestelltes Laufwerk vorgesehen ist, das auch im ausgefahrenen Zustand der Schublade 15 betriebsbereit ist.

Dem Anschlußstück 7 der Saughaltevorrichtung 1 ist mittels eines Schlauches 16 Vakuum zugeführt, das über die Durchführung 8 und die Rohrverbindung 9 zu den ringförmig angeordneten Vertiefungen 3a auf der Halteseite 2 der Vorrichtung 1 gelangt. In Fig. 2 ist der plattenförmige Informationsträger 11 auf der Halteseite im angesaugten Zustand dargestellt. Die Dichtlippen 4 bzw. 5 dichten das Vakuum nach außen bzw. zum Zentrum der Vorrichtung hin ab.

Der plattenförmige Informationsträger 11 ist damit auf der Halteseite 2 der Vorrichtung 1 plan gehalten und abspielbar. Beim Abspielvorgang dreht sich die Vorrichtung 1 und damit auch der angesaugte Informationsträger 11. Das drehbar gelagerte Anschlußstück 7 dreht sich nicht ebenso wie der Zuführungsschlauch 16. Da das Anschlußstück 7 mittels des Kugellagers 10 in der Vorrichtung 1 gelagert ist, ergibt sich durch die Vorrichtung jedoch während des Abspielvorganges nur ein geringes Bremsmoment, so daß der Abspielvorgang nicht gestört wird.

Ist die Schlauchverbindung 16 in sich relativ steif ausgeführt, so kann über die Schlauchverbindung 16 und mittels der Vorrichtung 1 ein angesaugter Informationsträger 11 dem Abspielgerät zugeführt werden und diesem auch wieder entnommen werden. Dabei entfällt die Notwendigkeit der Berührung des Informationsträgers mit der Hand bzw. den Fingern.

## Patentansprüche

1. Saughaltevorrichtung (1) zum Halten eines optisch auslesbaren, plattenförmigen Informationsträgers (11), die etwa den gleichen Durchmesser aufweist wie der Informationsträger, und die diesen während des Auslesens mittels eines Abspielgerätes (13) an ihrer Halteseite mittels Vakuum hält, die auf ihrer Halteseite (2) Vertiefungen (3a, 3b) aufweist,
und die mit einem mittels des Vakuums gehaltenen Informationsträger (11) drehbar auf den Drehteller (12) des Abspielgerätes aufsetzbar ist,
wobei das Vakuum den Vertiefungen auf der Halteseite der Vorrichtung von der der Halteseite gegenüberliegenden Seite her mittels eines Schlauches zugeführt ist, welcher auf ein drehbar gelagertes und mit einer luftdichten Durchführung (8) versehenes Anschlußstück an der Vorrichtung geführt ist,
dadurch gekennzeichnet, daß
die Vertiefungen ringförmig konzentrisch angeordnete Vertiefungen (3a) sind und durch wenigstens eine radial verlaufende Vertiefung (3b) verbunden sind.

2. Vorrichtung nach Anspruch 1, dadurch gekennzeichnet, daß die mit den Vertiefungen versehene Halteseite der Vorrichtung im Bereich ihres äußeren Randes und im Zentrumsbereich ringförmig angeordnete Dichtlippen (5) aufweist.

3. Vorrichtung nach Anspruch 1 oder 2, dadurch gekennzeichnet, daß die Halteseite der Vorrichtung im Zentrum mit einer Vertiefung zur Aufnahme eines Zentrierdorns (14) des Drehtellers (12) des Abspielgerätes versehen ist.

4. Vorrichtung nach einem der Ansprüche 1 bis 4, dadurch gekennzeichnet, daß das Anschlußstück an der Vorrichtung mittels eines Kugellagers gelagert ist.

5. Vorrichtung nach einem der Ansprüche 1 bis 5, dadurch gekennzeichnet, daß die Vorrichtung auch dem Transport des plattenförmigen Informationsträgers zum und vom Abspielgerät dient.

6. Vorrichtung nach einem der Ansprüche 1 bis 5, geeignet zum Hafthalten eines Galvanos.

## Claims

1. A suction holding device (1) for holding a optically readable disc-shaped information carrier (11), which device has substantially the same diameter as the information carrier and which holds said carrier on its holding side by means of a vacuum during read-out by means of a playing apparatus, which device has recesses (3a, 3b) in its holding side (2) and, together with an information carrier being held by means of the vacuum, can be placed rotatably on the turntable (12) of the playing apparatus, the device having concentrically arranged annular recesses and at least one radially extending recess in its holding side, the vacuum being applied from the side remote from the holding side of the device to the recesses in the holding side by means of a tube leading to a nozzle on the device, which nozzle is rotatably mounted on the device and has a air-tight lead-through (8), characterised in that the recesses are recesses (3a) arranged as concentric rings and are interconnected by at least one radially extending recess (3b).

2. A device as claimed in Claim 1, characterised in that the holding side of the device, which holding side has been provided with the recesses, has sealing lips (5) arranged as rings at its periphery and in the central area.

3. A device as claimed in Claim 1 or 2, characterised in that the holding side of the device has in its centre a recess for receiving a centring mandrel (14) of the turntable (12) of the playing apparatus.

4. A device as claimed in any one of Claims 1 to 4, characterised in that the nozzle is supported on the device by means of a ball-bearing.

5. A device as claimed in any one of Claims 1 to 4, characterised in that the device also serves for the transport of the disc-shaped information carrier towards and away from the playing apparatus.

6. A device as claimed in any one of Claims 1 to 5, adapted to hold a shell.

## Revendications

1. Dispositif de maintien à succion (1) destiné à maintenir un support d'information (11) en forme de disque à lecture optique, qui présente à peu près le même diamètre que le support d'information et qui maintient ce support d'information sur sa face de maintien au moyen d'un vide pendant la lecture à l'aide d'un appareil de lecture (13), qui présente, sur sa face de maintien (2), des creux (3a, 3b) et qui, par un support d'information (11) maintenu sous l'effet du vide, peut être posé avec possibilité de rotation sur le plateau tournant (12) de l'appareil de lecture, le vide étant appliqué aux creux sur la face de maintien du dispositif, depuis la face opposée à la face de maintien, au moyen d'un flexible qui est amené au dispositif sur une pièce de raccordement montée à rotation et pourvue d'un passage (8) étanche à l'air, caractérisé en ce que les creux sont des creux annulaires (3a) concentriques et sont reliés par au moins un creux (3b) radial.

2. Dispositif suivant la revendication 1, caractérisé en ce que la face de maintien du dispositif pourvue de creux présente, dans la zone de son bord extérieur et dans sa zone centrale, des lèvres d'étanchéité (5) de forme annulaire.

3. Dispositif selon la revendication 1 ou 2, caractérisé en ce que la face de maintien du dispositif est pourvue, au centre, d'un creux destiné à recevoir une broche centrale (14) du plateau tournant (12) de l'appareil de lecture.

4. Dispositif selon l'une des revendications 1 à 3, caractérisé en ce que la pièce de raccordement est montée sur le dispositif au moyen d'un roulement à billes.

5. Dispositif selon l'une des revendications 1 à 4, caractérisé en ce que le dispositif sert également au transport du support d'information en forme de disque vers l'appareil de lecture et à partir de celui-ci.

6. Dispositif selon l'une des revendications 1 à 5, convenant pour le maintien d'un galvano.
